# EUROPÄISCHE PATENTSCHRIFT

(11) **EP 2 042 361 B1**
(45) Veröffentlichungstag und Bekanntmachung des Hinweises auf die Patenterteilung: **07.09.2011**
(21) Anmeldenummer: 08015875.1
(22) Anmeldetag: 09.09.2008
(51) Int. Cl.: B60J 7/02, B62D 25/06, B62D 65/06

(54) **Fahrzeugdach**
Vehicle roof
Toit de véhicule

(30) Priorität: 26.09.2007 DE 102007046170
(43) Veröffentlichungstag der Anmeldung: 01.04.2009
(73) Patentinhaber: Webasto AG, 82131 Stockdorf (DE)
(72) Erfinder: Birndorfer, Robert, 82362 Weilheim (DE); Bergmiller, Alexander, 86343 Königsbrunn (DE); Schätzler, Walter, 82319 Starnberg (DE); Hölzel, Dominik, 82178 Puchheim (DE)
(74) Vertreter: Wiese, Gerhard

(56) Entgegenhaltungen:
- EP-A1- 1 669 245
- EP-A2- 0 697 299
- DE-C1- 4 313 555
- DE-C1- 19 613 761
- DE-C1- 19 713 347

## Beschreibung

Die Erfindung betrifft ein Fahrzeugdach gemäß Patentanspruch 1.

Aus der DE 196 13 761 C1 ist ein Fahrzeugdach mit einem von oben in eine große Dachöffnung mit innen liegenden Flanschen einsetzbaren Dachmodul bekannt. Ein tragender Dachrahmen, an dem Führungsschienen vorgesehen sind, wird über Verschraubungen an den Flanschen befestigt. Der tragende Dachrahmen ist mit einem nach oben weisenden vertikalen Steg versehen, an dem ein T-förmiger Außenrahmen befestigbar ist, der als Dichtrahmen den Spalt zwischen den seitlichen Dachholmen und den Dachteilen des Dachmoduls abdeckt.

Aus der DE 43 13 555 C1 ist ein Fahrzeugdach mit einem von oben in eine große Dachöffnung mit innen liegenden Flanschen einsetzbaren Dachmodul bekannt. Der tragende Dachrahmen wird mit der Oberseite des Flansches über eine Kleberaupe verklebt und seitlich über Verschraubungen an den Dachholmen befestigt. Mehrteilige Dachrahmen bringen einen erhöhten Dichtungsaufwand bei der Montage mit sich, da alle stoßstellen zwischen den Rahmenteilen einzeln sorgfältig abgedichtet werden müssen. Einteilige Dachrahmen bedeuten einen erhöhten Werkzeug Aufwand, da für jeden Fahrzeugtyp ein eigenes großes Werkzeug bereitgestellt werden muss.

Aufgabe der Erfindung ist es, ein Fahrzeugdach zu schaffen, bei dem das Dachmodul beim Fahrzeugzulieferer vollständig vormontiert werden kann und am Fahrzeug in einfacher Weise wasserdicht am Flansch des Rohbaus im Bereich der Dachöffnung befestigbar ist.

Die Aufgabe wird erfindungsgemäß durch die Merkmale des Patentanspruchs 1 gelöst. Vorteilhafte Ausgestaltungen der Erfindung sind in den Unteransprüchen angegeben.

Der Kern der Erfindung besteht darin, dass das Dachmodul mit einem rundum an allen Seiten der Dachöffnung geschlossenen Dichtrahmen versehen ist, der an Führungsschienen und Rahmenteilen eines modularen Dachrahmens befestigt ist, der mittels wenigstens einer Dichtung gegenüber dem Flansch abgedichtet ist, und dass ferner Befestigungselemente vorgesehen sind, durch die die Führungsschienen an der Unterseite des Flansches mit diesem verbindbar sind. Durch den Dichtrahmen wird eine wasserdichte Verbindung des Dachmoduls mit dem Flansch gewährleistet, ohne dass bei der Montage in das Fahrzeug zusätzliche Maßnahmen, wie das Aufbringen von Dicht- oder Kleberaupen notwendig wären.

Der Dichtrahmen wird bevorzugt aus einem Extrusionsprofil aus Kunststoff - insbesondere aus Ethylen-Propylen-Dien-Kautschuk (EPDM) - gebildet, wobei die Eckbereiche entweder durch vulkanisierte Stoßbereiche, beispielsweise als Gehrungsstoß unter einem Winkel von 45 ° oder aus anvulkanisierten Formecken gebildet werden, an denen die Extrusionsprofile jeweils stumpf anvulkanisiert sind. Die Eckbereiche können auch teilweise aus den abgewinkelten Extrusionsprofilen ausgeklinkt und durch anvulkanisierte Formecken ergänzt werden. Der Innenbereich ist dabei immer bevorzugt mit einer durchgehenden Dichtung versehen.

Der Dichtrahmen ist bevorzugt mit einem sich vertikal nach oben erstreckenden Steg versehen, der als definierter Abstandshalter zwischen dem Flansch und einem auf der Oberseite dieses Steges anliegenden Dachteil dient.

Der Dichtrahmen weist an seiner auf der Oberseite des Flansches aufliegenden Unterseite bevorzugt eine nach unten offene Dichtungsaufnahme zur Aufnahme der Dichtung auf. Diese kann als dauerelastische Dichtraupe, beispielsweise aus Butyl, in die Dichtungsaufnahme eingebracht werden. Dies kann durch Einkleben oder Einspritzen erfolgen. Sie kann auch als weichere Dichtung unmittelbar am Extrusionsprofil des Dichtrahmens mit ausgebildet sein. Alternativ dazu kann die Dichtung auch vor dem Aufsetzen des Dachmoduls auf der Oberseite des Flansches angeordnet werden.

Der Dichtrahmen weist ferner in der Nähe seiner innenliegenden Kante bevorzugt an der Unterseite einen Träger zur Befestigung an der Führungsschiene bzw. an einem Rahmenteil des Dachrahmens auf. Die Befestigung ist bevorzugt in Form einer Clipsverbindung realisiert.

Der Dichtrahmen weist ferner nahe seiner innen liegenden Kante an der Oberseite eine Dichtung auf, die sich dichtend an die Innenseite des darüber liegenden Dachteils anlegt. Diese Dichtung wird bevorzugt einstückig am Extrusionsprofil des Dichtrahmens ausgebildet, wobei die Dichtung beispielsweise durch einen höheren Anteil von Weichmachern bevorzugt aus einem weicheren Kunststoff (mit einer Shore-Härte von 20 - 45, besonders bevorzugt aus Ethylen-Propylen-Dien-Kautschuk (EPDM) oder Moosgummi) ausgebildet ist als der übrige Teil des Dichtrahmens mit einer Shore-Härte von etwa 90. Optional kann auch eine aufgesteckte oder aufgeklebte Dichtung verwendet werden.

Die Befestigungselemente werden bevorzugt von Tragwinkeln gebildet, die über einen vertikalen unteren Steg mit der Führungsschiene und über einen horizontalen oberen Steg mit der Unterseite des Flansches verbunden sind. Die Befestigung erfolgt bevorzugt sowohl an der Führungsschiene als auch am Flansch durch Schraubverbindungen, die mittels Langlöchern in horizontaler Richtung (X bzw. Y-Richtung) und/oder in vertikaler Richtung (Z-Richtung) einstellbar befestigt sind.

Nachfolgend werden Ausführungsbeispiele des erfindungsgemäßen Fahrzeugdaches unter Bezugnahme auf die Zeichnung näher erläutert. Es zeigt:
- Fig. 1: eine schematische perspektivische Teilansicht eines Fahrzeugs mit einem geschlossenen Fahrzeugdach;
- Fig. 2: eine schematische perspektivische Teilansicht des Fahrzeugs gemäß Figur 1 mit geöffnetem Fahrzeugdach;

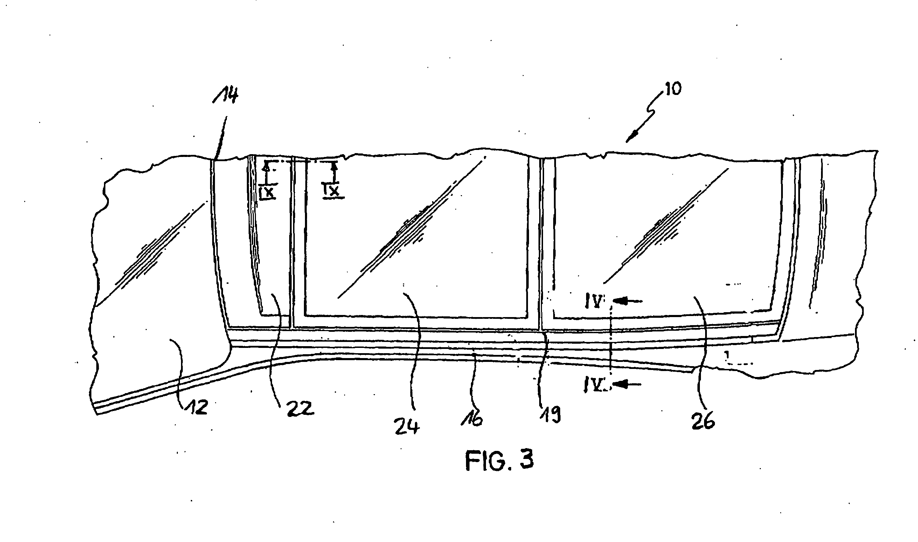

- Fig. 3: eine teilweise Draufsicht auf das Fahrzeug gemäß Figur 1;

- Fig. 4: einen Teilschnitt gemäß der Schnittlinie IV-IV in Figur 3;
- Fig. 5: eine schematische Draufsicht auf eine Ecke des Dichtrahmens in einer ersten Ausführungsform;
- Fig. 6: eine schematische Draufsicht auf eine Ecke des Dichtrahmens in einer zweiten Ausführungsform;
- Fig. 7: eine Variante zur Figur 4 mit einer abweichenden Gestaltung der Unterseite des Flansches;
- Fig. 8: eine weitere Variante zur Figur 4 mit einer abweichenden Gestaltung der Unterseite des Flansches; und
- Fig. 9: einen Teilschnitt gemäß der Schnittlinie IX-IX in Figur 3 durch den Flansch im Bereich des vorderen Rahmenteils.

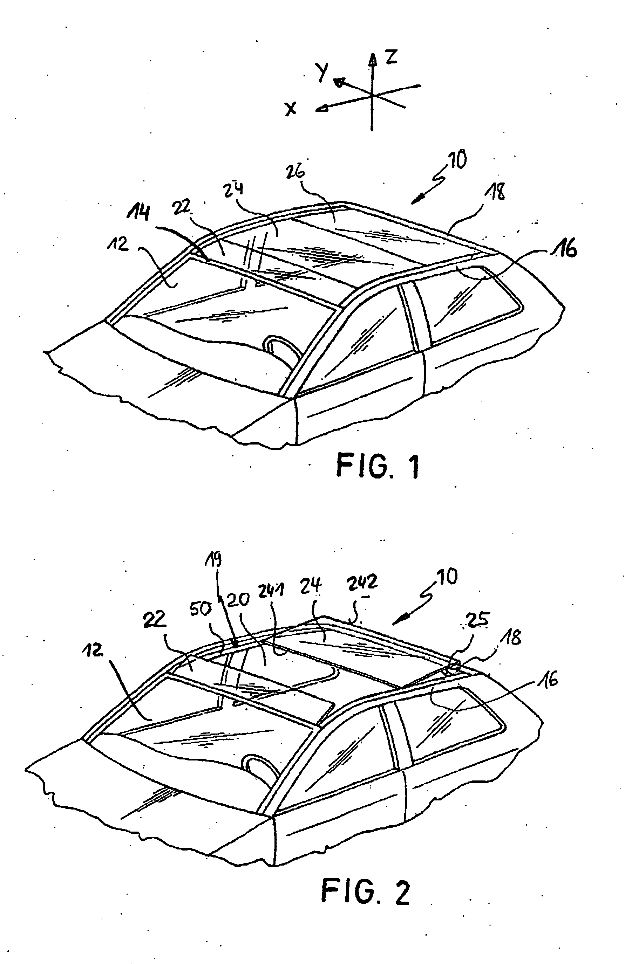

Das in Figur 1 und 2 dargestellte Fahrzeug weist anschließend an die Oberkante einer Frontscheibe 12 einen quer verlaufenden Windlauf 14, sich seitlich nach hinten an diesen anschließende Seiten holme 16 und einen die Seitenholme verbindenden hinteren Querholm 18 auf. An den Seitenholmen16 sowie bevorzugt auch am Windlauf 14 und am hinteren Querholm 18 ist an der Innenseite ein nach innen vorspringender Flansch 30 ausgebildet, dessen innere Kante eine Dachöffnung 20 begrenzt, in die ein Dachmodul 10 von oben her einsetzbar ist.

Das Dachmodul 10 wird gebildet von einem sich an den Windlauf 14 anschließenden vorderen festen Dachteil 22, das optional - wie in Fig. 2 angedeutet - auch als schwenkbare Windabweislamelle 22 ausgebildet sein kann, einem daran nach hinten anschließenden bewegbaren Dachteil 24 und einem hinteren festen Dachteil 26.

Die Dachteile 22, 24 und 26 sind an einem Dachrahmen 19 gelagert, der in den seitlichen Bereichen mit Führungsschienen 50 versehen oder dort von diesen gebildet ist. Die Führungsschienen 50 weisen Führungsbahnen 54 und Kabelkanäle 53 zur Führung von nicht dargestellten Antriebskabeln auf. Diese dienen zur Betätigung einer nur in Figur 2 schematisch angedeuteten Mechanik 25 zur Betätigung des bewegbaren Dachteils 24.

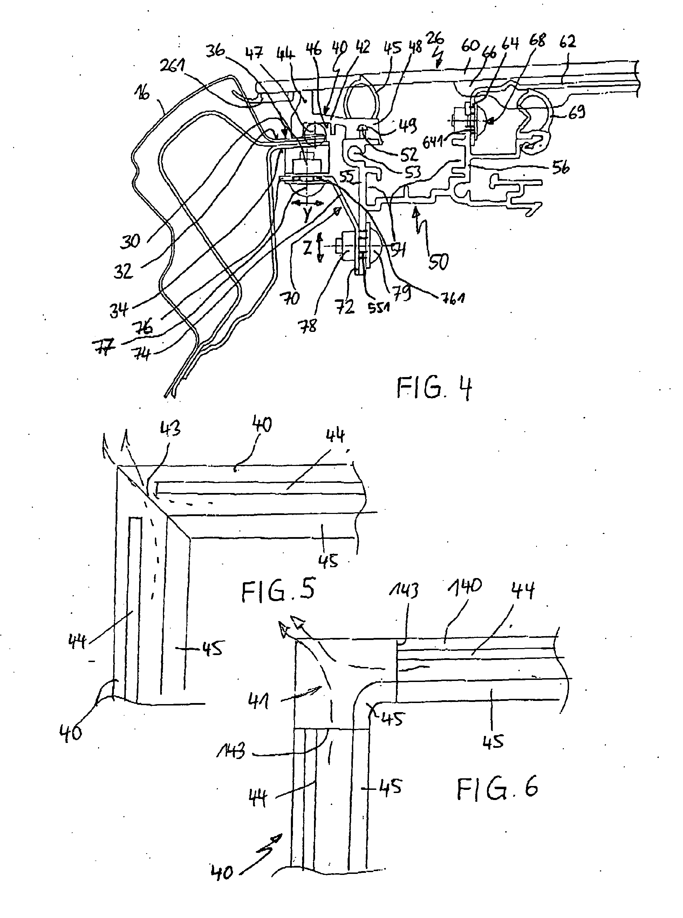

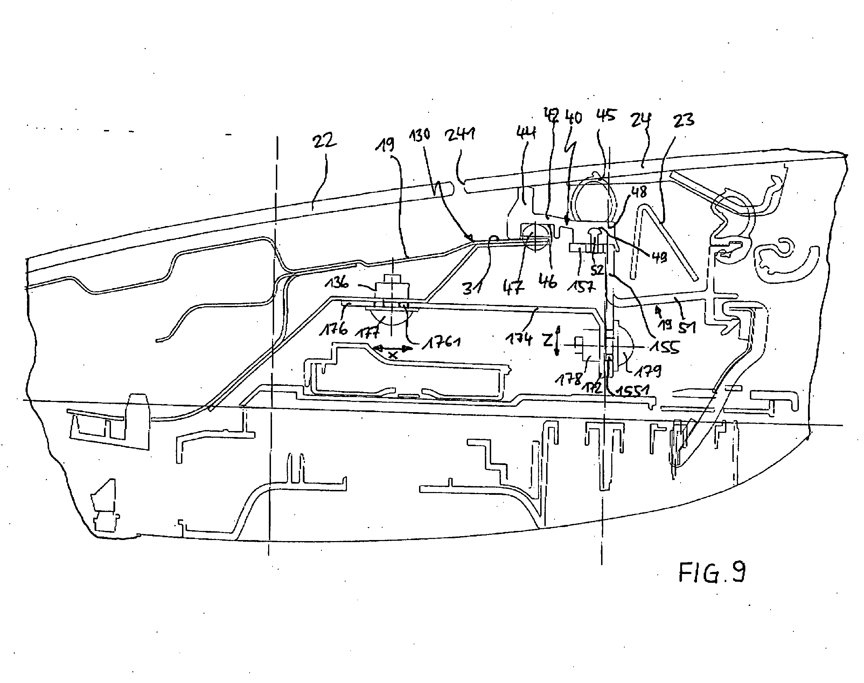

Das Dachteil 24 ist um eine nahe der Vorderkante 241 angeordnete Schwenkachse mit seiner Hinterkante 242 nach oben schwenkbar und anschließend nach hinten über das feste Dachteil 26 verschiebbar. Die optional vorgesehene Windabweislamelle 22 ist ebenfalls mit ihrer Hinterkante nach oben schwenkbar, um bei geöffnetem Dachteil 24 den Fahrtwind über die dann teilweise freigegebene Dachöffnung 20 zu leiten. Bei Vorsehen eines festen Dachteils 22 (anstelle der schwenkbaren Windabweislamelle) ist im vorderen Dachbereich unterhalb des Dachteils 241 Windabweiser 23 angeordnet (Figur 9), der bei geschlossenem Dachteil 24 in einen Aufnahmeraum eines vorderen Rahmenteils 51 des Dachrahmens 19 abgesenkt ist und der bei geöffnetem Dachteil 24 mittels einer nicht dargestellten Feder über das Niveau des Fahrzeugdachs nach oben ausgestellt wird, um den Fahrtwind über die Dachöffnung 20 zu leiten. An den Führungsschienen 50 sind auch das hintere feste Dachteil 26, wie in Figur 4 gezeigt, und optional die ausstellbare Windabweislamelle 22 gelagert.

Die Führungsschienen 50 sind mit einem Dichtrahmen 40 verbunden, der alle Seiten der Dachöffnung 20 in Form eines geschlossenen Rahmens umgibt. Der Dichtrahmen 40 bzw. 140 (Fig. 6) wird bevorzugt durch Extrusionsprofile aus Kunststoff gebildet, die, wie in den Figuren 5 und 6 gezeigt, in den Eckbereichen in Form eines auf Gehrung unter einem Winkel von 45° geschnittenen Stoßes 43 (Figur 5) oder durch zwei stumpfe Stoßbereiche 143 mit einer eingesetzten Formecke 41 aus Kunststoff verbunden sind. Die Verbindung in den Stoßbereichen 43 bzw. 143 erfolgt jeweils wasserdicht durch Vulkanisieren.

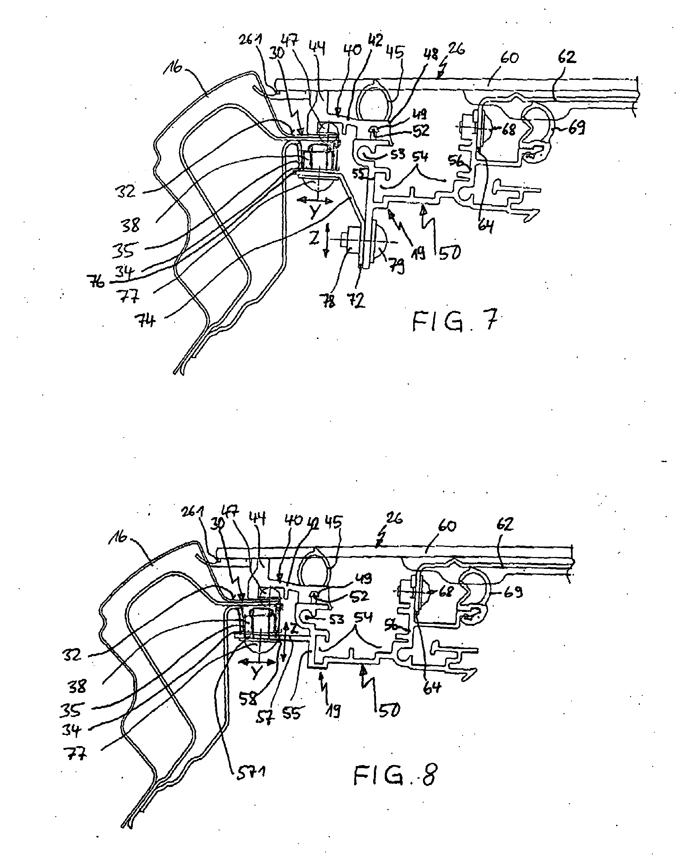

Am Dichtrahmen 40 bzw. 140 ist nahe an seiner Außenkante ein sich vertikal nach oben erstreckender Steg 44 angeformt, der, wie in den Fign. 4 und 7 gezeigt, als Abstandshalter zwischen der Oberseite 32 des Flansches 30 und der Innenseite des Dachteils (dort 26) fungiert. Die Unterseite des Steges 44 liegt auf der Oberseite 32 des Flansches 30 auf. Der Steg 44 kann auch von mehreren voneinander beabstandeten Stegteilen gebildet sein. An den Steg 44 schließt sich nach innen ein im Wesentlichen horizontaler Teil 42 des Dichtrahmens 40 an, an dessen Unterseite - nach außen begrenzt durch den Steg 44 - eine nach unten offene Dichtungsaufnahme 46 zur Aufnahme einer unteren Dichtung 47 ausgebildet ist. Die untere Dichtung 47 ist beispielsweise als dauerelastische Butyl-Dichtschnur ausgebildet, die in die Dichtungsaufnahme 46 eingelegt, eingeklebt oder eingespritzt wird. Alternativ dazu kann die untere Dichtung 47 auch vor Montage des Dachmoduls 10 auf die Oberseite 32 des Flansches aufgebracht werden oder als weichere Komponente einstückig mit am Extrusionsprofil des Dichtrahmens 40 ausgebildet sein. Die Dichtung 47 sorgt umlaufend für eine wasserdichte Verbindung zwischen dem Dichtrahmen 40 und dem Flansch 30, so dass kein Wasser von außen über den Flansch 30 zur Dachöffnung 20 durchdringen kann.

Nahe der Innenkante des Dichtrahmens 40 ist an dessen Oberseite eine obere Dichtung 45 angeordnet, die sich, wie in den Fign. 4 und 7 gezeigt, dichtend an die Unterseite der Dachteile (dort am Dachteil 26, weiter vorne am Dachteil 24) anlegt. Die obere Dichtung 45 ist bevorzugt einstückig mit dem Extrusionsprofil des Dichtrahmens 40 ausgebildet. Sie ist auch im Bereich des Stoßes 43 bzw. 143 ungeteilt (bei Ausklinkung nur des äußeren Bereichs des Extrusionsprofils im Eckbereich) oder durch Zusammenvulkanisieren, gegebenenfalls mit einem gleichartigen Dichtungsprofil an der Formecke 41, durchgehend wasserdicht ausgebildet.

An der Unterseite des horizontalen Teils 42 des Dichtrahmens 40 ist nahe der inneren Kante ein Träger 48 mit einer nach unten offenen Aufnahme 49 ausgebildet, die zur formschlüssigen Verbindung mit einem Befestigungsteil 52 der Führungsschiene 50 zusammenwirkt. Diese Verbindung ist bevorzugt als Clips-Verbindung ausgebildet. Die Verbindung hält die Führungsschiene 50 mit dem Dichtrahmen 40 insbesondere vor der Montage im Fahrzeug zusammen. Sie zieht den Dichtrahmen 40 aber auch nach der Montage im Fahrzeug gegen die Oberseite 32 des Flansches 30. Die Verbindung überträgt jedoch keine mechanischen Kräfte, wie sie durch eine Betätigung der Dachteile 22 bzw. 24 entstehen. Diese werden von der Führungsschiene 50 über die Befestigungselemente 70 unmittelbar auf den Flansch 30 der Karosserie geleitet.

Die Führungsschiene 50 weist in ihrem äußeren Teil einen vertikalen äußeren Steg 55 auf, in dessen oberem Bereich das Befestigungsteil 52 angeordnet ist. Nahe der Innenseite weist die Führungsschiene 50 einen vertikalen inneren Steg 56 auf. An diesem ist, wie in den Fign. 4 und 7 gezeigt, das feste Dachteil 26 mit einem an der Unterseite seiner Scheibe 60 angeordneten Innenblech 62 befestigt, das mit der Scheibe 60 durch einen geschäumten Kunststoffrahmen 66 verbunden ist. Die Befestigung erfolgt im Bereich eines nach unten abgewinkelten vertikalen Steges 64 des Innenbleches 62 mittels einer Verschraubung 68, die vorzugsweise über ein Langloch 641 am Steg 64 oder am Steg 56 höhenverstellbar ist. Zum Fahrzeuginnenraum hin werden die Führungsschiene 50 und insbesondere der Bereich der Verschraubung 68 mittels einer auf einen horizontalen Steg der Führungsschiene 50 aufgesteckten Dichtung 69 abgedeckt. Diese Dichtung 69 hat gleichzeitig die Funktion einer Innenblende und wirkt auch als Akustik-Dichtung für eine bessere Schallisolierung des Fahrzeuginnenraums.

Zwischen den vertikalen Stegen 55 und 56 weist die Führungsschiene mehrere Führungsbahnen 54 sowie einen Kabelkanal 53 auf, die zur Lagerung und zur Betätigung der Mechanik 25 des bewegbaren Dachteils 24 und zur optionalen Bewegung der nicht dargestellten Mechanik der Windabweislamelle 22 dienen. Am unteren Ende des äußeren vertikalen Steges 55 liegt an der Außenseite ein vertikaler Steg 72 eines als Tragwinkel 74 ausgebildeten Befestigungselements 70 an. Der Tragwinkel 74 weist an seinem oberen äußeren Ende einen horizontalen oberen Steg 76 auf, der zur Befestigung an der Unterseite 34 des Flansches 30 dient. Die Befestigung des vertikalen Steges 55 am Tragwinkel 74 beziehungsweise am vertikalen Steg 72 erfolgt mittels einer Schraube 79 und einer Mutter 78. Die von diesen gebildete Verschraubung ist durch ein Langloch 551, das entweder im vertikalen Steg 72 oder - wie in Fig. 4 gezeigt - im vertikalen Steg 55 ausgebildet ist, in der Höhe einstellbar, so wie dies durch den Pfeil Z angedeutet ist. Die Befestigung des horizontalen Steges 76 des Befestigungselements 70 an der Unterseite 34 des Flansches 30 erfolgt mittels einer Schraube 77, die von unten in eine am Flansch 30 befestigte Mutter 36 eingeschraubt wird. Die Mutter 36 kann als Schweißmutter an der Unterseite 34 des Flansches 30 befestigt sein. Alternativ dazu kann die Unterseite 34 des Flansches 30, wie in Figur 7 gezeigt, auch in Form einer nach unten geformten Sicke 35 ausgebildet sein, in die eine Mutter 38 formschlüssig eingelegt werden kann. Die Verbindung der Schraube 77 mit der Mutter 36 beziehungsweise 38 ist wiederum durch ein sich in Längsrichtung erstreckendes Langloch 761 im horizontalen Steg 76 in Querrichtung einstellbar, so wie dies durch den Pfeil Y angedeutet ist.

Bei der Montage wird das beim Fahrzeugzulieferer komplett vormontierte Dachmodul 10 mit dem an den Führungsschienen 50 befestigten Dichtrahmen 40 auf die Oberseite 32 des Flansches 30 aufgesetzt. Die Dichtung 47 ist dabei, wie vorstehend schon ausgeführt, entweder in der Dichtungsaufnahme 46 oder auf der Oberseite 32 des Flansches 30 bereits angeordnet. Anschließend werden auf jeder Seite der Dachöffnung 20 mehrere Befestigungselemente 70 mit dem vertikalen Steg 55 der Führungsschiene 50 und mit der Unterseite 34 des Flansches 30 verbunden. Dabei wird der mit der Führungsschiene 50 verbundene Dichtrahmen 40 gegen die Oberseite 32 des Flansches 30 gezogen, wodurch sich die Dichtung 47 verformt und eine wasserdichte Abdichtung gegenüber dem Flansch 30 bildet. An der Außenseite der Dachteile 22, 24 und 26 können den Dachholmen 16 zugewandt zusätzliche Dichtelemente vorgesehen sein, so wie dies für das Dachteil 26 mit der Dichtung 261 in den Fign. 4 und 7 gezeigt ist. Diese Dichtung 261 bildet eine erste Barriere gegen eindringendes Wasser von oben. Sofern das Wasser dennoch bis zur Oberseite 32 des Flansches vordringt, bildet der Steg 44 des Dichtrahmens 40 in Verbindung mit der Dichtung 47 eine wasserdichte innere Begrenzung einer zwischen der inneren Flanke des Dachholms 16, der Oberseite 32 des Flansches 30 und der Außenseite des Steges 44 gebildeten Wasserrinne: Sollte an der Unterseite der Scheibe 60 im Außenbereich Wasser über die Dichtung 261 nach innen vordringen und dabei auch die Oberseite des Steges 44 überwinden, wird dieses Wasser spätestens durch die obere Dichtung 45 aufgefangen und durch die zwischen der Innenseite des Steges 44, der Oberseite des horizontalen Teils 42 des Dichtrahmens 40 und der Außenseite der oben Dichtung 45 gebildeten Wasserrinne in die Eckbereiche abgeleitet, so wie dies durch die Pfeile in den Fign. 5 und 6 angedeutet ist. Die vertikalen Stegen 44 sind zu diesem Zweck in den Eckbereichen unterbrochen.

Bei der Ausführungsform gemäß Figur 8 ist abweichend von den Fign. 4 und 71 Führungsschiene 50 unmittelbar ein nach außen weisender horizontaler Steg 57 ausgebildet, der zur Befestigung am Flansch 30 dient. Die Klammerförmigen Befestigungselemente 70 werden dadurch ersetzt. Die horizontale Einstellung der Schraubverbindung 77 in Y-Richtung erfolgt über ein im horizontalen Steg 57 ausgebildetes Langloch 571; die vertikale Einstellung in Z-Richtung kann erforderlichenfalls über Beilagscheiben 58 erfolgen.

In Figur 9 ist der vordere Verbindungsbereich zwischen dem Dachmodul 10 und dem festen Fahrzeugdach gezeigt. Der Dichtrahmen 40 ist in diesem Bereich über die Clips-Verbindung 49, 52 mit einem horizontalen Steg 157 eines vorderen Rahmenteils 51 verbunden. Das vordere Rahmenteil 51 weist einen vertikalen Steg 155 auf. An diesen vertikalen Steg 155 ist im unteren Bereich ein Langloch 1551 ausgebildet, durch welches ein Befestigungselement in Form eines Tragwinkels 154 mit einem vertikalen Steg 172 mittels einer aus einer Schraube 179 und einer Mutter 178 bestehenden Schraubverbindung befestigt ist. Ein sich nach außen (nach vorne) erstreckender horizontaler Steg 176 des Tragwinkels 174 weist ein Langloch 1761 auf, über welches er mit einer von einer Schraube 177 und einer Mutter 136 gebildeten Schraubverbindung mit einem vom Flansch 130 abgehenden unteren Flanschblech verbunden ist. Analog zu der in Figur 9 gezeigten Verbindung kann der Dachrahmen 19 auch im Bereich des hinteren Querholms 18 über ein hinteres Rahmenteil mit der Karosserie verbunden sein.

Durch die Erfindung wird eine einfache, beim Fahrzeugzulieferer komplett vormontierbare und prozesssicher wasserdichte Verbindung eines Dachmoduls mit einem Fahrzeugdach ermöglicht. Der Dichtrahmen 40 weist bevorzugt eine Steifigkeit aus, die ausreicht, um die Führungsschiene 50 und die Rahmenteile 51 beim Einsetzen in die Dachöffnung 20 zu tragen, bis deren Verbindung mit dem Flansch 30 über die Befestigungselemente 70 erfolgt ist.

### Bezugszeichenliste

| | | | |
|---|---|---|---|
| 10 | Dachmodul | 48 | Träger (an 40) |
| 12 | Frontscheibe | 49 | Aufnahme (an 40, für 52) |
| 14 | Windlauf | 50 | Führungsschiene |
| 16 | Seitenholm | 51 | Rahmenteil |
| 18 | (hinterer) Querholm | 52 | Befestigungsteil (an 50) |
| 19 | Dachrahmen | 53 | Kabelkanal |
| 20 | Dachöffnung | 54 | Führungsbahnen |
| 22 | (vorderes festes) Dachteil | 55 | (vertikaler äußerer) Steg |
| 23 | Windabweiser | 551 | Langloch (in 55) |
| 24 | (bewegbares) Dachteil | 56 | (vertikaler innerer) Steg |
| 241 | Vorderkante (von 24) | 57 | (horizontaler äußerer) Steg |
| 242 | Hinterkante (von 24) | 571 | Langloch (in 57) |
| 25 | Mechanik (von 24) | 58 | Beilagscheiben |
| 26 | (hinteres festes) Dachteil | 60 | Scheibe |
| 261 | Dichtung (an 26) | 62 | Innenblech |
| 30 | Flansch | 64 | (vertikaler) Steg (an 62) |
| 31 | (vorderer) Flanschbereich | 641 | Langloch |
| 32 | Oberseite (von 30) | 66 | Kunststoffrahmen |
| 34 | Unterseite (von 30) | 68 | Verschraubung |
| 35 | Sicke | 69 | Dichtung (bzw. Innenblende) |
| 36 | Mutter | 70 | Befestigungselement |
| 38 | (Schweiß-)Mutter | 72 | (vertikaler unterer) Steg |
| 40 | Dichtrahmen | 74 | Tragwinkel (von 70) |
| 41 | Formecke | 76 | (horizontaler oberer) Steg |
| 42 | (horizontaler) Teil (von 40) | 761 | Langloch (in 76) |
| 43 | Stoß | 77 | Schraube |
| 44 | Steg (an 40) | 78 | Mutter |
| 45 | (obere) Dichtung (an 40) | 79 | Schraube |
| 46 | Dichtungsaufnahme (an 40) | 130 | Flansch |
| 47 | (untere) Dichtung | 136 | Mitter |
| 140 | Dichtrahmen | 1761 | Langloch (in 176) |
| 143 | Stoß | 177 | Schraube |
| 155 | (vertikaler) Steg | 178 | Mutter |
| 1551 | Langloch (in 155) | 179 | Schraube |
| 157 | (horizontaler) Steg | | |
| 172 | (vertikaler) Steg | | |
| 174 | Tragwinkel | | |
| 176 | (horizontaler) Steg | | |

## Patentansprüche

1. Fahrzeugdach mit einer Dachöffnung (20),
mit einem die Dachöffnung (20) umgebenden Flansch (30, 130), an dem ein von oben in die Dachöffnung (20) einsetzbares Dachmodul (10)
mit einem wenigstens ein Rahmenteil (51) umfassenden Dachrahmen (19),
mit am Dachrahmen angeordneten Führungsschienen (50) und
mit wenigstens einem an diesen Führungsschienen (50) gelagerten Dachteil (24, 26)
befestigbar ist, wobei
der Dachrahmen (19) mit einem von oben auf den Flansch (30, 130) aufsetzbaren, alle Seiten der Dachöffnung (20) umgebenden Dichtrahmen (40) versehen ist,
an dem die Führungsschienen (50) und die Rahmenteile (51) des Dachrahmens (19) befestigt sind,
der mittels wenigstens einer Dichtung (47) gegenüber dem Flansch (30, 130) abgedichtet ist, und
wobei ferner Befestigungselemente (70) vorgesehen sind, durch die die Führungsschienen (50) und die Rahmenteile (51) des Dachrahmens (19) an der Unterseite (34) des Flansches (30, 130) mit diesem verbindbar sind.

2. Fahrzeugdach nach Anspruch 1,
**dadurch gekennzeichnet, dass** der Dichtrahmen (40) aus Extrusionsprofilen aus Kunststoff besteht.

3. Fahrzeugdach nach Anspruch 2,
**dadurch gekennzeichnet, dass** die Extrusionsprofile in den Eckbereichen der Dachöffnung (20) in einem Stoß (43, 143) dicht zusammenvulkanisiert sind.

4. Fahrzeugdach nach Anspruch 2,
**dadurch gekennzeichnet, dass** in jedem Eckbereich eine Formecke (41) vorgesehen ist, mit der die Extrusionsprofile dicht zusammenvulkanisiert sind.

5. Fahrzeugdach nach einem der Ansprüche 1 bis 4,
**dadurch gekennzeichnet, dass** am Dichtrahmen (40) ein sich nach oben erstreckender Steg (44) als Abstandshalter zur Innenseite des Dachteils (24, 26) vorgesehen ist.

6. Fahrzeugdach nach einem der Ansprüche 1 bis 5,
**dadurch gekennzeichnet, dass** die Dichtung (47) von einer nach unten offenen Dichtungsaufnahme (46) des Dichtrahmens (40) aufgenommen wird.

7. Fahrzeugdach nach einem der Ansprüche 1 bis 6,
**dadurch gekennzeichnet, dass** am Dichtrahmen (40) ein Träger (48) zur Befestigung der Führungsschiene (50) oder des Rahmenteils (51) vorgesehen ist.

8. Fahrzeugdach nach einem der Ansprüche 1 bis 7,
**dadurch gekennzeichnet, dass** auf der innen liegenden Seite des Dichtrahmens (40) eine sich nach oben erstreckende Dichtung (45) zur Anlage an der Innenseite des Dachteils (22, 24, 26) vorgesehen ist.

9. Fahrzeugdach nach Anspruch 8,
**dadurch gekennzeichnet, dass** die Dichtung (45) einstückig am Extrusionsprofil des Dichtrahmens (40) ausgebildet ist.

10. Fahrzeugdach nach Anspruch 9,
**dadurch gekennzeichnet, dass** die Dichtung (45) aus einem weicheren Kunststoff als der übrige Teil des Dichtrahmens (40) gebildet ist.

11. Fahrzeugdach einem der vorhergehenden Ansprüche,
**dadurch gekennzeichnet, dass** die Befestigungselemente (70) von Tragwinkeln (74, 174) gebildet werden, die über einen vertikalen unteren Steg (72, 172) mit der Führungsschiene (50) oder den Rahmenteilen (51) und die mit einem horizontalen oberen Steg (76) mit dem Flansch (30, 130) verbunden sind.

12. Fahrzeugdach nach Anspruch 11,
**dadurch gekennzeichnet, dass** die Befestigungselemente (70) durch Schraubverbindungen (77, 36; 78, 79; 136, 177; 178, 179) und Langlöcher (551, 761; 1551, 1761) in horizontaler Richtung (Y-Richtung oder X-Richtung) und/oder in vertikaler Richtung (Z-Richtung) einstellbar befestigbar sind.

13. Fahrzeugdach nach einem der Ansprüche 1 bis 12,
**dadurch gekennzeichnet, dass** die Verbindung zwischen dem Dichtrahmen (40) und der Führungsschiene (50) oder dem Rahmenteil (51) als ClipsVerbindung (49, 52) ausgebildet ist.

## Claims

1. Vehicle roof with a roof opening (20),
with a flange (30, 130) which surrounds the roof opening (20) and to which a roof module (10) which can be inserted from above into the roof opening (20) and has a roof frame (19) comprising at least one frame part (51), with guide rails (50) arranged on the roof frame and with at least one roof part (24, 26) mounted on said guide rails (50), can be fastened, wherein the roof frame (19) is provided with a sealing frame (40) which can be placed onto the flange (30, 130) from above and surrounds all sides of the roof opening (20) and to which the guide rails (50) and the frame parts (51) of the roof frame (19) are fastened and which is sealed off from the flange (30, 130) by means of at least one seal (47), and wherein, furthermore, fastening elements (70) are provided, by means of which the guide rails (50) and the frame parts (51) of the roof frame (19) can be connected to the flange (30, 130) on the lower side (34) thereof.

2. Vehicle roof according to Claim 1, **characterized in that** the sealing frame (40) consists of extrusion profiles made of plastic.

3. Vehicle roof according to Claim 2, **characterized in that** the extrusion profiles are tightly vulcanized together in a joint (43, 143) in the corner regions of the roof opening (20).

4. Vehicle roof according to Claim 2, **characterized in that** a shaped corner (41) with which the extrusion profiles are tightly vulcanized together is provided in each corner region.

5. Vehicle roof according to one of Claims 1 to 4, **characterized in that** an upwardly extending web (44) is provided on the sealing frame (40) as a spacer with respect to the inside of the roof part (24, 26).

6. Vehicle roof according to one of Claims 1 to 5, **characterized in that** the seal (47) is held by a downwardly open sealing mount (46) of the sealing frame (40).

7. Vehicle roof according to one of Claims 1 to 6, **characterized in that** a support (48) for the fastening of the guide rail (50) or of the frame part (51) is provided on the sealing frame (40).

8. Vehicle roof according to one of Claims 1 to 7, **characterized in that** an upwardly extending seal (45) is provided on the inner side of the sealing frame (40) for bearing against the inside of the roof part (22, 24, 26).

9. Vehicle roof according to Claim 8, **characterized in that** the seal (45) is formed integrally on the extrusion profile of the sealing frame (40).

10. Vehicle roof according to Claim 9, **characterized in that** the seal (45) is formed from a softer plastic than the remaining part of the sealing frame (40).

11. Vehicle roof according to one of the preceding claims, **characterized in that** the fastening elements (70) are formed by supporting brackets (74, 174) which are connected via a vertical lower web (72, 172) to the guide rail (50) or the frame parts (51) and which are connected by a horizontal upper web (76) to the flange (30, 130).

12. Vehicle roof according to Claim 11, **characterized in that** the fastening elements (70) can be fastened adjustably in the horizontal direction (Y direction or X direction) and/or in the vertical direction (Z direction) by screw connections (77, 36; 78, 79; 136, 177; 178, 179) and elongated holes (551, 761; 1551, 1761).

13. Vehicle roof according to one of Claims 1 to 12, **characterized in that** the connection between the sealing frame (40) and the guide rail (50) or the frame part (51) is designed as a clip connection (49, 52).

## Revendications

1. Toit de véhicule comprenant une ouverture de toit (20),
avec une bride (30, 130) entourant l'ouverture de toit (20),
à laquelle peut être fixé un module de toit (10) pouvant être inséré par le dessus dans l'ouverture de toit (20),
avec un cadre de toit (19) comprenant au moins une partie de cadre (51),
avec des rails de guidage (50) disposés sur le cadre de toit et
avec au moins une partie de toit (24, 26) montée sur ces rails de guidage (50),
le cadre de toit (19) étant pourvu d'un cadre d'étanchéité (40) entourant tous les côtés de l'ouverture de toit (20), pouvant être posé par le dessus sur la bride (30, 130),
sur lequel sont fixés les rails de guidage (50) et les parties de cadre (51) du cadre de toit (19),
qui est étanché vis-à-vis de la bride (30, 130) au moyen d'au moins une garniture d'étanchéité (47), et
des éléments de fixation (70) étant en outre prévus, par le biais desquels les rails de guidage (50) et les parties de cadre (51) du cadre de toit (19) peuvent être raccordés au niveau du côté inférieur (34) de la bride (30, 130) à cette dernière.

2. Toit de véhicule selon la revendication 1, **caractérisé en ce que** le cadre d'étanchéité (40) se compose de profilés extrudés en plastique.

3. Toit de véhicule selon la revendication 2, **caractérisé en ce que** les profilés extrudés sont vulcanisés hermétiquement ensemble dans un joint (43, 143) dans les régions de coin de l'ouverture de toit (20).

4. Toit de véhicule selon la revendication 2, **caractérisé en ce que** dans chaque région de coin est prévu un coin moulé (41), avec lequel les profilés extrudés sont vulcanisés hermétiquement ensemble.

5. Toit de véhicule selon l'une quelconque des revendications 1 à 4,
**caractérisé en ce qu'**une nervure (44) s'étendant vers le haut est prévue sur le cadre d'étanchéité (40) en tant qu'élément d'espacement par rapport au côté intérieur de la partie de toit (24, 26).

6. Toit de véhicule selon l'une quelconque des revendications 1 à 5,
**caractérisé en ce que** la garniture d'étanchéité (47) est reçue par un logement d'étanchéité (46) du cadre d'étanchéité (40) ouvert vers le bas.

7. Toit de véhicule selon l'une quelconque des revendications 1 à 6,
**caractérisé en ce qu'**un support (48) pour la fixation du rail de guidage (50) ou de la partie de cadre (51) est prévu sur le cadre d'étanchéité (40).

8. Toit de véhicule selon l'une quelconque des revendications 1 à 7,
**caractérisé en ce que** du côté situé vers l'intérieur du cadre d'étanchéité (40), est prévue une garniture d'étanchéité (45) s'étendant vers le haut pour l'appui contre le côté intérieur de la partie de toit (22, 24, 26).

9. Toit de véhicule selon la revendication 8,
**caractérisé en ce que** la garniture d'étanchéité (45) est réalisée d'une seule pièce sur le profilé extrudé du cadre d'étanchéité (40).

10. Toit de véhicule selon la revendication 9,
**caractérisé en ce que** la garniture d'étanchéité (45) est formée en un plastique plus souple que la partie restante du cadre d'étanchéité (40).

11. Toit de véhicule selon l'une quelconque des revendications précédentes,
**caractérisé en ce que** les éléments de fixation (70) sont formés par des coudes de support (74, 174), qui sont connectés par le biais d'une nervure verticale inférieure (72, 172) au rail de guidage (50) ou aux parties du cadre (51) et qui sont connectés avec une nervure supérieure horizontale (76) à la bride (30, 130).

12. Toit de véhicule selon la revendication 11,
**caractérisé en ce que** les éléments de fixation (70) peuvent être fixés par des connexions vissées (77, 36 ; 78, 79 ; 136, 177 ; 178, 179) et des trous oblongs (551, 761 ; 1551, 1761) de manière ajustable dans la direction horizontale (direction Y ou direction X) et/ou dans la direction verticale (direction Z).

13. Toit de véhicule selon l'une quelconque des revendications 1 à 12,
**caractérisé en ce que** la connexion entre le cadre d'étanchéité (40) et le rail de guidage (50) ou la partie de cadre (51) est réalisée sous forme de connexion par enclipsage (49, 52).
